# EUROPEAN PATENT APPLICATION

(11) **EP 4 604 571 A1**
(43) Date of publication of application: **20.08.2025**
(21) Application number: 25156514.9
(22) Date of filing: 07.02.2025
(51) Int. Cl.: H04R 1/28

(54) **VEHICLE SPEAKER**

(30) Priority: 15.02.2024 JP 2024021084
(71) Applicant: Alps Alpine Co., Ltd., Ota-ku, Tokyo 145-8501 (JP)
(72) Inventor: Ito, Ryo, Iwaki-city Fukushima (JP)
(74) Representative: Schmitt-Nilson Schraud Waibel Wohlfrom Patentanwälte Partnerschaft mbB

(57) **Abstract**

A vehicle speaker includes a vibration portion, a magnetic driver configured to drive the vibration portion, and a housing in which the vibration portion and the magnetic driver are accommodated, and a sound pressure opening is formed. A sound pressure space partitioned by the vibration portion and communicating with the sound pressure opening is formed in the housing. The sound pressure space includes a duct portion extending from a starting edge to the sound pressure opening, where the starting edge is an edge of the vibration portion closest to the sound pressure opening. A cross-sectional area of a space of the duct portion at the starting edge is larger than an area of the sound pressure opening.

## Description

The present disclosure relates to a vehicle speaker in which a sound pressure space partitioned by a vibration portion is formed in a housing and a sound pressure opening, through which the sound pressure space communicates with outside of the housing, is formed in the housing.

JP 2013-118585 A and JP 2019-125962 A describe vehicle speakers used as so-called subwoofers or the like. In each of the above vehicle speakers, a sound generating unit including a diaphragm and a magnetic driver is disposed. A duct is integrally formed in a housing of the vehicle speaker, where the duct guides the sound pressure generated by vibrations of the diaphragm to outside of the housing, and a sound emission opening is formed in the duct. The housing including the diaphragm is installed in an external space of a vehicle, and the duct is attached to a hole formed in a partition wall of the vehicle. The sound pressure generated in the housing by vibrations of the diaphragm is radiated as a reproduced sound from the sound emission opening of the duct to the interior space of the cabin of the vehicle.

The vehicle speaker disclosed in JP 2013-118585 A includes the duct having a rectangular cross-sectional shape, where the cross-sectional area of the duct is uniform across the entire length in the longitudinal direction. The vehicle speaker disclosed in JP 2019-125962 A includes the duct having a so-called constricted shape where the cross-sectional area of the duct gradually decreases toward the sound emission opening until reaching a halfway point, and gradually increases from the halfway point toward the sound emission opening.

The present disclosure relates to a vehicle speaker according to the appended claims. Embodiments are disclosed in the dependent claims. According to one aspect of the present disclosure, a vehicle speaker includes a vibration portion, a magnetic driver configured to drive the vibration portion, and a housing in which the vibration portion and the magnetic driver are accommodated, and a sound pressure opening is formed. A sound pressure space partitioned by the vibration portion and communicating with the sound pressure opening is formed in the housing. The sound pressure space includes a duct portion extending from a starting edge to the sound pressure opening, where the starting edge is an edge of the vibration portion closest to the sound pressure opening. A cross-sectional area of a space of the duct portion at the starting edge is larger than an area of the sound pressure opening.

Objects and further features of the present disclosure will be apparent from the following detailed description when read in conjunction with the accompanying drawings, in which:
Fig. 1 is a plan view illustrating a vehicle speaker according to an embodiment of the present disclosure;
Fig. 2 is a side view illustrating the vehicle speaker according to an embodiment of the present disclosure;
Fig. 3 is a perspective view including a partial cross-section of the vehicle speaker according to an embodiment of the present disclosure;
Fig. 4 is a horizontal cross-sectional view of the vehicle speaker according to an embodiment of the present disclosure;
Fig. 5 is an enlarged partial view of the horizontal cross-sectional view of Fig. 4;
Fig. 6 is an enlarged partial view of the side view of Fig. 2;
Fig. 7A is a horizontal cross-sectional view illustrating a first modification example of the vehicle speaker of the present disclosure;
Fig. 7B is a vertical cross-sectional view illustrating the first modification example of the vehicle speaker of the present disclosure;
Fig. 8A is a horizontal cross-sectional view illustrating a second modification example of the vehicle speaker of the present disclosure;
Fig. 8B is a vertical cross-sectional view illustrating the second modification example of the vehicle speaker of the present disclosure; and
Fig. 9 is a graph describing the frequency response of the vehicle speaker according to an embodiment of the present disclosure.

In the vehicle speakers disclosed in JP 2013-118585 A and JP 2019-125962 A, the sound generating unit including the diaphragm and the magnetic driver is accommodated in the housing, and the sound pressure generated by vibrations of the diaphragm affects the interior of the housing. Since the duct is formed in the housing, a mass of the air inside the duct serves as a load for vibrating the diaphragm, and therefore the response obtained by the sound generating unit becomes equivalent to a response obtained by the sound generating unit in which the mass of the diaphragm is increased. As a result, the lowest resonance frequency f0 of the vibration portion is lowered. Therefore, a reproduction frequency band of the sound generating unit can be further expanded to a bass range when the sound generating unit is operated in a housing including a duct, compared with when the sound generating unit is operated without being accommodated in a housing. On the other hand, the duct may lower the reproduction sensitivity in the bass range and the sound pressure in the bass range may be reduced because an air flow in the duct increases the load energy at the time when the diaphragm is operated. For the above speakers, it is desired to design the shape of the housing and duct considering the balance between the above conflicting properties, i.e., expansion of reproduction frequencies toward the bass range, and enhancement of the sensitivity in the bass range.

A sound emission opening of a duct provided in a vehicle speaker needs to match with a hole formed in a partition wall that partitions an interior space of a cabin from an exterior space of the cabin. However, there is a limit in increasing the size of the hole of the partition wall. Therefore, an area of the sound emission opening of the duct cannot be increased significantly. The vehicle speaker disclosed in JP 2013-118585 A includes the duct having a uniform cross-sectional area in the longitudinal direction. If the area of the sound emission opening of the duct is matched with the hole of the partition wall of a vehicle, a cross-sectional area at each position of the duct becomes small so that the integral value of the cross-sectional area across the entire duct also becomes small. Therefore, the load applied when the air moves in the duct is increased, and the sensitivity of the reproduction frequencies in the bass range is likely to be lowered. The vehicle speaker disclosed in JP 2019-125962 A includes the duct having the constricted shape where the cross-sectional area of the duct becomes small toward the sound emission opening until reaching the halfway point. Therefore, even in this duct shape, the load applied when the air moves in the duct is increased, and it is difficult to increase the sensitivity in the bass range.

An object of the present disclosure is to provide a vehicle speaker having a configuration by which an effect of expanding a reproduction frequency band to a bass range and an effect of increasing a sensitivity in the bass range in a well-balanced manner may be improved without increasing an area of a sound pressure opening formed at a duct.

The vehicle speaker according to an aspect of the present disclosure includes a vibration portion, a magnetic driver configured to drive the vibration portion, and a housing in which the vibration portion and the magnetic driver are accommodated, and a sound pressure opening is formed. A sound pressure space partitioned by the vibration portion and communicating with the sound pressure opening is formed in the housing. The sound pressure space includes a duct portion extending from a starting edge to the sound pressure opening, where the starting edge is an edge of the vibration portion closest to the sound pressure opening. A cross-sectional area of a space of the duct portion at the starting edge is larger than an area of the sound pressure opening.

The vehicle speaker of the present disclosure may be configured such that, when the duct portion is divided into multiple sections by evenly dividing a distance from the starting edge to the sound pressure opening, among the multiple sections, an internal volume of a starting-edge-side section including the starting edge is larger than an internal volume of a sound-pressure-opening-side section including the sound pressure opening.

For example, when the duct portion is divided into two sections, i.e., the starting-edge-side section including the starting edge and the sound-pressure-opening-side section including the sound pressure opening, by bisecting the distance from the starting edge to the sound pressure opening, an internal volume of the starting-edge-side section is larger than an internal volume of the sound-pressure-opening-side section.

Alternatively, when the duct portion is divided into three sections, i.e., the starting-edge-side section including the starting edge, an intermediate section, and the sound-pressure-opening-side section including the sound pressure opening, by evenly dividing the distance from the starting edge to the sound pressure opening into three, an internal volume of the starting-edge-side section including the starting edge is larger than an internal volume of the sound-pressure-opening-side section including the sound pressure opening and an internal volume of the intermediate section.

The vehicle speaker of the present disclosure is preferably configured such that the cross-sectional area of the space of the duct portion gradually decreases from the starting edge toward the sound pressure opening.

Moreover, an aspect of the present disclosure relates to a vehicle speaker that includes a vibration portion, a magnetic driver configured to drive the vibration portion, a housing in which the vibration portion and the magnetic driver are accommodated, and a sound pressure opening is formed. A sound pressure space partitioned by the vibration portion and communicating with the sound pressure opening is formed in the housing. When a virtual line passing through a center of the vibration portion and extending in a vibration direction of the vibration portion is determined as a vibration center line, and a line intersecting the vibration center line at a right angle and extending to a center of the sound pressure opening is determined as a plane center line, a width of the housing in a direction perpendicular to both vibration center line and the plane center line gradually decreases from a position of the vibration center line toward the sound pressure opening.

The vehicle speaker of the present disclosure is preferably configured such that a height of the housing projected onto a vertical plane parallel to both the vibration center line and the plane center line gradually decreases from the position of the vibration center line toward the sound pressure opening.

### <Configuration of a vehicle speaker>

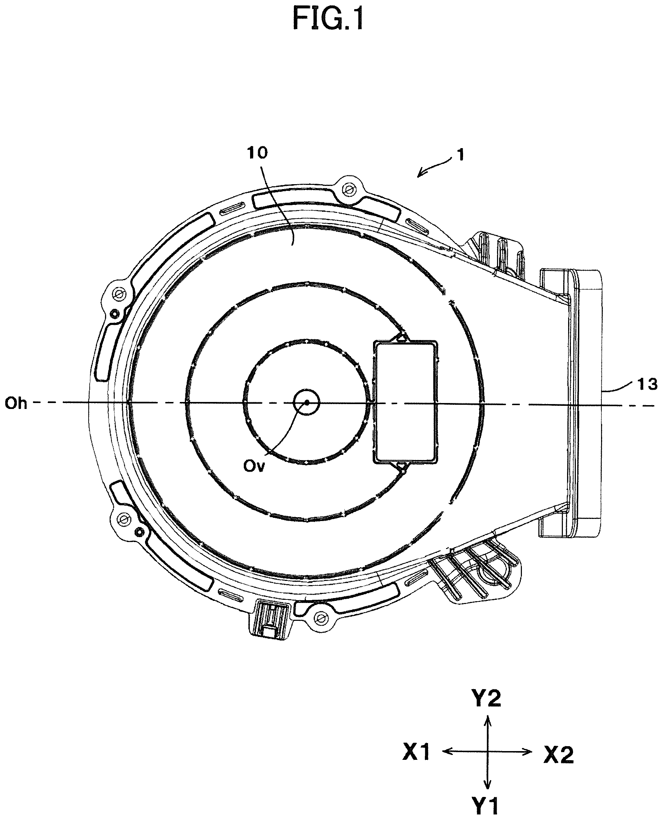

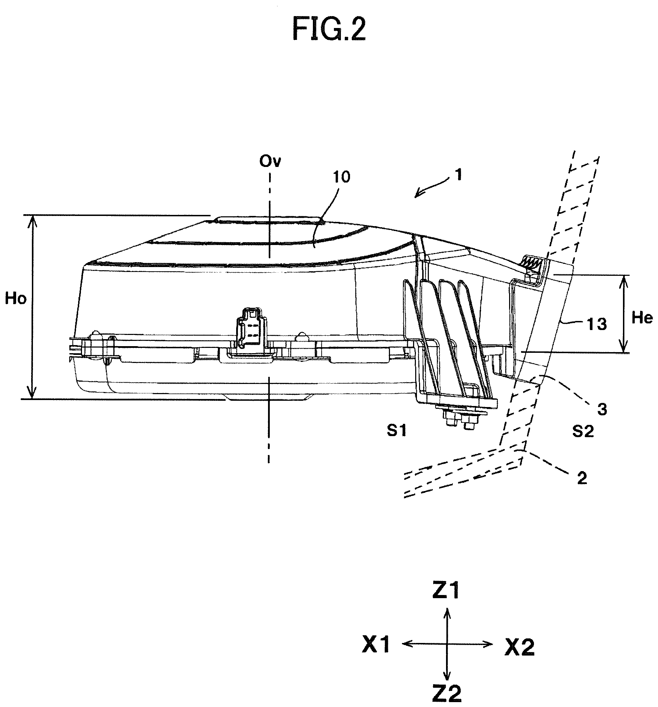

Figs. 1 to 6 illustrate a vehicle speaker 1 according to an embodiment of the present disclosure. A partition wall 2 of a vehicle, such as a car, is illustrated in Fig. 2, and an opening 3 is formed in the partition wall 2. One of the spaces across the partition wall 2 is an interior cabin space S1 that communicates with the cabin of the vehicle, and the other space is an exterior cabin space S2 that communicates with the space outside the vehicle. The vehicle speaker 1 is installed in the interior cabin space S1, and the sound generated by vibrations of a diaphragm is radiated to the interior cabin space S1. The sound pressure opening 13 formed at a duct of the housing 10 of the vehicle speaker 1 is coupled to the opening 3, and a sound pressure space inside the housing communicates with the exterior cabin space S2. In contrast to Fig. 2, the vehicle speaker 1 may be installed in the exterior cabin space S2, and the sound pressure opening 13 of the duct may be coupled to the opening 3. In the installation example as mentioned, the sound pressure space in the housing communicates with the interior cabin space S1 via the duct, and the sound pressure opening 13 of the duct functions as a sound emission opening for emitting sound to the interior cabin space S1.

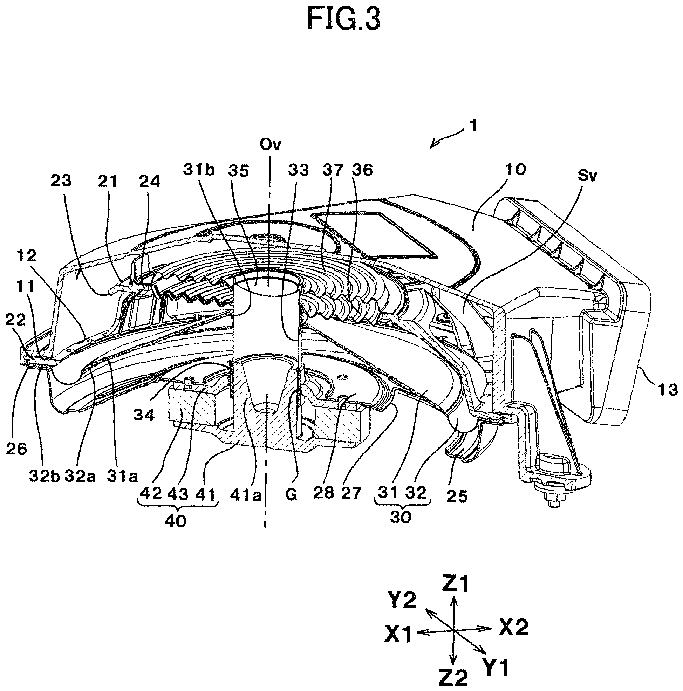

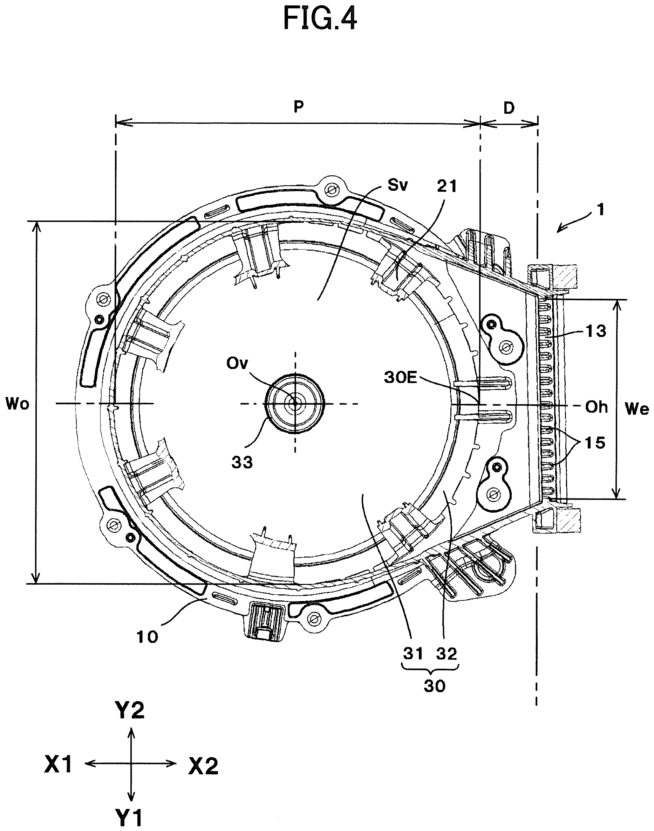

As illustrated in Fig. 3, the vehicle speaker 1 includes the diaphragm 31, which is a constituent component of a vibration portion 30, in the housing, and the diaphragm 31 is characterized by a vibration center line Ov that is a virtual line passing through the center of the diaphragm 31 and extends in the vibration direction of the diaphragm 31. The Z1-Z2 direction is a vertical direction (up-down direction) parallel to the vibration center line Ov, the Z1 direction is an upward direction, and the Z2 direction is a downward direction. Moreover, the Z2 direction is a sound emission direction when the diaphragm 31 vibrates. As illustrated in Fig. 4, a line intersecting the vibration center line Ov at a right angle and extending to the center of the sound pressure opening 13 of the housing 10 is a plane center line Oh. The X1-X2 direction is a longitudinal direction parallel to the plane center line Oh, the X1 direction is the direction toward the inside of the housing, and the X2 direction is the direction in which the sound pressure is released from the duct. The Y1-Y2 direction is a widthwise direction intersecting with both the vibration center line Ov and the plane center line Oh at a right angle. Fig. 1 and Fig. 4 are respectively a plan view and a horizontal cross-sectional view, in which the vehicle speaker 1 is projected onto a plane (X-Y plane) perpendicular to the vibration center line Ov. Fig. 2 is a side view in which the vehicle speaker 1 is projected onto a vertical plane (X-Z plane) parallel to both the vibration center line Ov and the plane center line Oh.

Fig. 3 illustrates an internal configuration of the vehicle speaker 1. The vehicle speaker 1 includes the housing 10. The housing 10 is formed by die-casting a metal material or injection-molding a reinforced plastic material. A substantially circular opening 12 is formed in a bottom portion 11 of the housing 10 facing the downward direction (Z2 direction). The housing 10 is provided with an upper frame 21 and a lower frame 25, which face the opening 12. The outer circumference 22 of the upper frame 21 and the outer circumference 26 of the lower frame 25 are vertically stacked, and are secured, by screwing, to the lower side of the bottom portion 11 of the housing 10 at the peripheral portion of the opening 12. A plurality of windows 23 are opened in the upper frame 21, and a plurality of windows 27 are also opened in the lower frame 25.

As illustrated in Fig. 3, the vibration portion 30 is disposed at a position facing the opening 12 in the housing 10. The vibration portion 30 includes a cone-shaped diaphragm 31 that mainly contributes to generation of the sound pressure, and an edge member 32 bonded to the outer circumference of the diaphragm 31. The edge member 32 has a semicircular cross-section and a ring shape when projected onto a plane. The inner circumference 32a of the edge member 32 is secured onto the outer circumference 31a of the diaphragm 31 by bonding, and the outer circumference 32b of the edge member 32 is interposed between the outer circumference 22 of the upper frame 21 and the outer circumference 26 of the lower frame 25, and is secured to the peripheral portion of the opening 12 of the housing 10.

As illustrated in Fig. 3, a center hole 31b is formed in the center of the cone-shaped diaphragm 31, and a cylindrical bobbin 33 is secured to the inside of the center hole 31b. A voice coil 34 is wound around and fixed to the outer circumference of the lower portion of the bobbin 33. The opening at the top of the bobbin 33 is sealed with a cap 35. Damper members 36 and 37 are provide inside the housing 10. Each of the damper members 36 and 37 has a circular shape as a shape projected onto a plane, and has a corrugated cross-section. The outer circumference of each of the damper members 36 and 37 is bonded to and secured onto an upper support 24 of the upper frame 21, and the inner circumference of each of the damper members 36 and 37 is bonded to and secured onto the outer circumferential surface of the bobbin 33. The diaphragm 31 is supported by the edge member 32, and the damper members 36 and 37, and can vibrate in the vertical direction along the vibration center line Ov by elastic deformation of the edge member 32 and the damper members 36 and 37.

As illustrated in Fig. 3, a magnetic circuit 40 is supported by the central portion 28 of the lower frame 25. The magnetic circuit 40 includes a lower yoke 41 having a center pole 41a formed of a magnetic metallic material, a ring-shaped magnet 42 secured on the outer circumference of the lower yoke 41, and a ring-shaped upper yoke 43 that is secured onto the upper surface of the magnet 42 and is formed of a magnetic metallic material. The upper surface of the upper yoke 43 is secured to the lower surface of the central portion 28 of the lower frame 25. A magnetic gap G is formed between the outer circumferential surface of the center pole 41a of the lower yoke 41 and the inner circumferential surface of the upper yoke 43, and the voice coil 34 provided on the lower outer circumference of the bobbin 33 is positioned inside the magnetic gap G.

In the magnetic circuit 40, a magnetic flux crossing the magnetic gap G is formed. The voice current flowing through the voice coil 34 positioned inside the magnetic gap G and the magnetic flux crossing the voice coil 34 inside the magnetic gap G generate an electromagnetic force, which applies a vertical vibration force to the vibration portion 30 via the voice coil 34. The magnetic circuit 40 and the voice coil 34 constitute a "magnetic driver."

The opening 12 formed in the bottom portion 11 of the housing 10 is sealed with the cap 35 that seals the top of the vibration portion 30 comprised of the diaphragm 31 and the edge member 32 and the top of the bobbin 33. As illustrated in Fig. 4, the housing 10 is provided with the sound pressure opening 13 that opens in the X2 direction. The inside of the housing 10 is a sound pressure space Sv that is completely partitioned by the vibration portion 30 and the cap 35 sealing the opening 12, and the sound pressure space Sv communicates with the space outside the housing 10 only through the sound pressure opening 13.

As illustrated in Fig. 2, the housing 10 of the vehicle speaker 1 is installed in the interior cabin space S1, and the sound pressure opening 13 is secured inside the opening 3 formed in the partition wall 2. As the diaphragm 31 vibrates, the generated sound pressure acts on the interior cabin space S1 through the windows 27 formed in the lower frame 25, thereby reproducing a sound in the interior cabin space S1. As the diaphragm 31 vibrates, a back pressure in antiphase to the sound pressure acting on the cabin interior space S1 acts on the sound pressure space Sv in the housing 10, but the back pressure is applied to the exterior cabin space S2 through the sound pressure opening 13.

### <Shape of sound pressure space Sv>

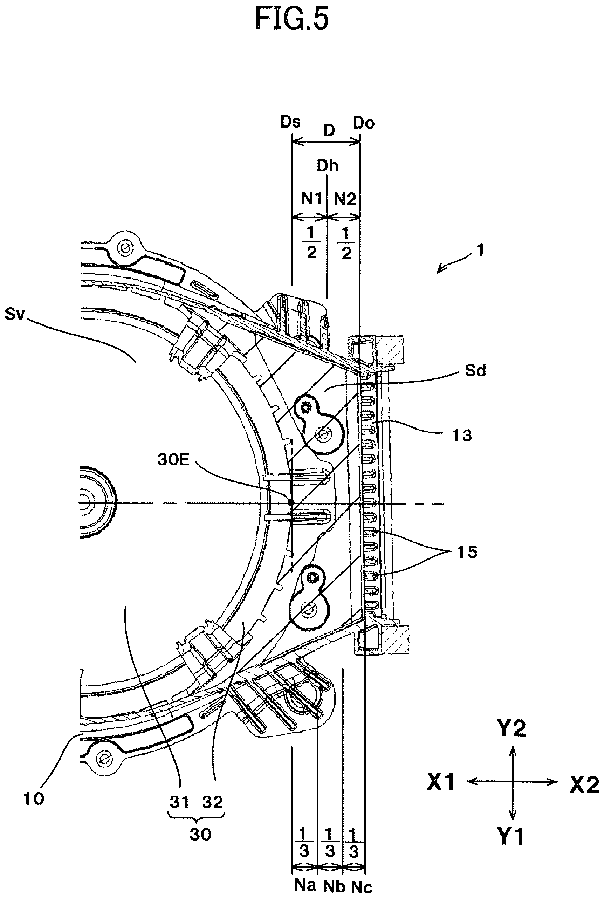

Fig. 4 illustrates the internal configuration of the sound pressure space Sv inside the housing 10 as a horizontal cross-sectional view projected onto a plane (X-Y plane) perpendicular to the vibration center line Ov. Within the sound pressure space Sv, a planar region, onto which the vibration portion 30 including the diaphragm 31 and the edge member 32 is projected, is a sound pressure acting portion P that directly receives the air pressure generated by vibrations of the vibration portion 30. Within the sound pressure space Sv, the region other than the sound pressure acting portion P, i.e., the region Sd indicated by hatching in Fig. 5, is a region for guiding the air pressure that has acted on the sound pressure acting portion P to the sound pressure opening 13. In the following description, within the region Sd indicated by hatching in Fig. 5, an edge of the vibration portion 30 closest to the sound pressure opening 13 is determined as a starting edge 30E, and a region from the starting edge 30E to the sound pressure opening 13 is described as a duct portion D.

As illustrated in Fig. 4, the width of the housing 10 in the Y1-Y2 direction perpendicular to both the vibration center line Ov and the plane center line Oh gradually decreases from the position of the vibration center line Ov toward the center of the sound pressure opening 13. The sound pressure space Sv inside the housing 10 has the largest width Wo at the vibration center line Ov and the smallest width We at the center of the sound pressure opening 13. The width of the sound pressure space Sv gradually decreases in a linear function manner from the largest width Wo to the smallest width We. Note that the width of the sound pressure space Sv may gradually decrease in a quadratic function manner from the largest width Wo to the smallest width We. As illustrated in Fig. 2, the height of the housing 10 projected onto a vertical plane parallel to both the vibration center line Ov and the plane center line Oh is the largest Ho at the position of the vibration center line Ov and the smallest He at the center of the sound pressure opening. The height of the housing 10 gradually decreases from the maximum height Ho to the minimum height He.

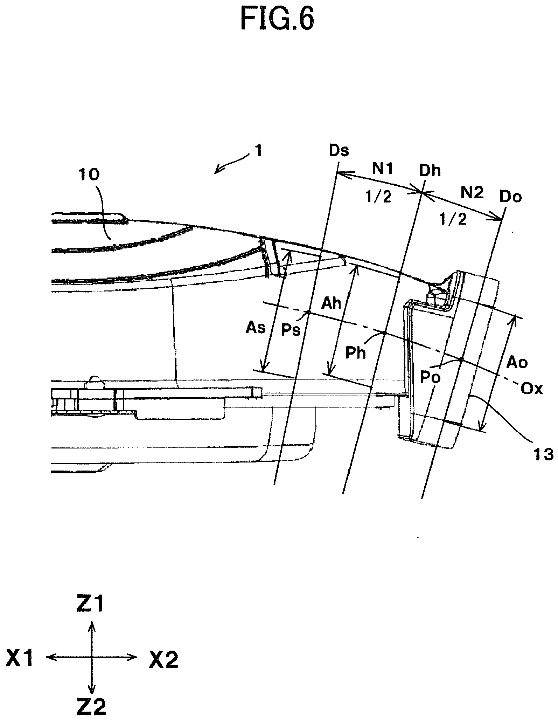

In Figs. 5 and 6, within the duct portion D that is a part of the sound pressure space Sv, a cross-section passing through the starting edge 30E is indicated by Ds, and a cross-section passing through the center of the sound pressure opening 13 is indicated by Do. Moreover, an intermediate cross-section at an intermediate position that bisects a distance from the cross-section Ds to the cross-section Do in the X direction is indicated by Dh. A cross-sectional area of the space in the duct portion D at the cross-section Ds is indicated by As, a cross-sectional area of the space of the duct portion D at the intermediate cross-section Dh is indicated by Ah, and a cross-sectional area of the space of the duct portion D at the cross-section Do is indicated by Ao.

As illustrated in Fig. 6, a portion where the duct portion D of the housing 10 is formed is slightly curved to descend toward the sound pressure opening 13. The cross-sectional areas As, Ah, and Ao are vertical cross-sectional areas of the duct portion D at the positions of Ps, Ph, and Po illustrated in Fig. 6, respectively. That is, when a vertical line passing through centers of arbitrary cross-sections aligned in the X direction is determined as a duct center line Ox, each of the cross-sections Ds, Dh, and Do is a plane perpendicular to a tangent line of the duct center line Ox, and each of the cross-sectional areas As, Ah, and Ao is a cross-sectional area on the plane perpendicular to the tangent line of the duct center line Ox. Alternatively, each of the cross-sectional areas As, Ah, and Ao is an area of the cross-section with which the cross-sectional area becomes the smallest among the cross-sections passing through the respective position of Ps, Ph, or Po. A grid 15 for dustproofing is provided to the sound pressure opening 13. Alternatively, a perforated plate or a net may be provided. The cross-sectional area Ao at the cross-section Do passing through the center of the sound pressure opening 13 is a cross-sectional area with assumption that the grid 15, perforated plate, or net is not present, and the cross-sectional area Ao is an opening area of the sound pressure opening 13.

The shape of the space of the duct portion D that is a part of the sound pressure space Sv is such that the cross-sectional area As of the internal space of the duct portion D at the cross-section Ds passing through the starting edge 30E is larger than the cross-sectional area Ao of the space at the cross-section Do passing through the center of the sound pressure opening 13. The cross-sectional area Ah of the space at the intermediate cross-section Dh is smaller than the cross-sectional area As, and is larger than the cross-sectional area Ao. The cross-sectional area of the duct portion D is the smallest at Ao, and becomes larger in the order of Ah and then As (As > Ah > Ao). The cross-sectional area of the space of the duct portion D gradually decreases from the cross-sectional area As to the cross-sectional area Ao.

As illustrated in Figs. 5 and 6, when the inside of the duct portion D is divided into a starting-edge-side section N1 including the starting edge 30E, which is from the cross-section Ds to the intermediate cross-section Dh, and a sound-pressure-opening-side section N2 including the sound pressure opening 13, which is from the intermediate cross-section Dh to the cross-section Do, the internal volume of the starting-edge-side section N1 is larger than the internal volume of the sound-pressure-opening-side section N2. As illustrated in Fig. 5, moreover, when the inside of the duct portion D is divided into three sections in the X direction, i.e., a starting-edge-side section Na including the starting edge 30E, a sound-pressure-opening-side section Nc including the sound pressure opening 13, and an intermediate section Nb, the internal volume of the starting-edge-side section Na is larger than the internal volume of the sound-pressure-opening-side section Nc and is larger than the internal volume of the intermediate section Nb. Moreover, the internal volume decreases in the order of the starting-edge-side section Na, the intermediate section Nb, and the sound-pressure-opening-side section Nc. That is, when the duct portion D is divided into multiple sections by evenly dividing the distance in the X direction from the starting edge 30E to the sound pressure opening 13, the internal volume of the starting-edge-side section including the starting edge 30E is larger than the internal volume of the sound-pressure-opening-side section including the sound pressure opening 13.

### <Acoustic effect>

The sound pressure space Sv, which is the internal space of the housing 10, includes the region Sd indicated by hatching in parallel with the sound pressure acting portion P that directly receives the air pressure generated by vibrations of the vibration portion 30. The region Sd is a region for guiding the air pressure that has acted on the sound pressure acting portion P to the sound pressure opening 13, and part of the region Sd constitutes the duct portion D. A mass of the air inside the region Sd and the duct portion D serves as a load mass when the vibration portion 30 is operated, and the response obtained by the reproducing unit including the vibration portion 30 and the magnetic circuit 40 is equivalent to a response obtained when the mass of the vibration portion 30 is increased. Therefore, the lowest resonance frequency f0 of the vibration portion is lowered, which can expand the reproduction frequencies to the bass range.

The housing 10 and the duct portion D have the following characteristics.
(a) The sound pressure space Sv inside the housing 10 has the largest width Wo at the center line Ov, and the smallest width We at the center of the sound pressure opening 13, and the width of the sound pressure space Sv gradually decreases from the largest width Wo to the smallest width We. The height of the housing 10 gradually decreases from the maximum height Ho to the minimum height He.
(b) The cross-sectional area of the duct portion D satisfies As > Ao, and As > Ah > Ao.
(c) When the duct portion D is divided into multiple sections by evenly dividing the distance from the starting edge 30E to the sound pressure opening 13 in the X direction, an internal volume of the starting-edge-side section including the starting edge 30E is larger than an internal volume of the sound-pressure-opening-side section including the sound pressure opening 13.

When the vibration portion 30 vibrates and the air flows into the duct portion D, the smaller the cross-section of the duct portion D is, the larger the resistance force is, and as the value obtained by integrating the areas of the cross-sections in the X direction across the entire length of the duct decreases, the load energy of the air flowing the entire area inside the duct portion D increases. As the load energy increases, the dynamic resistance of the vibration portion 30 increases, the sensitivity in the bass range decreases, and the generated sound pressure in the bass range decreases. The opening 3 formed in the partition wall 2 illustrated in Fig. 2 is determined by a type of vehicle, and therefore the area of the sound pressure opening 13 is limited. In the vehicle speaker 1 of the present embodiment, as described in (a), (b), and (c) above, the cross-sectional area or the volume of the sound pressure space Sv is set to increase from the sound pressure opening 13 toward the inside of the housing 10, and therefore the volume obtained by integrating the areas of the cross-sections of the duct portion D of the duct portion in the X direction across the entire length of the duct portion becomes large. Thus, the load energy applied when the vibration portion 30 vibrates can be reduced, and the sensitivity in the bass range is increased so that the reproduced sound pressure in the bass range can be increased.

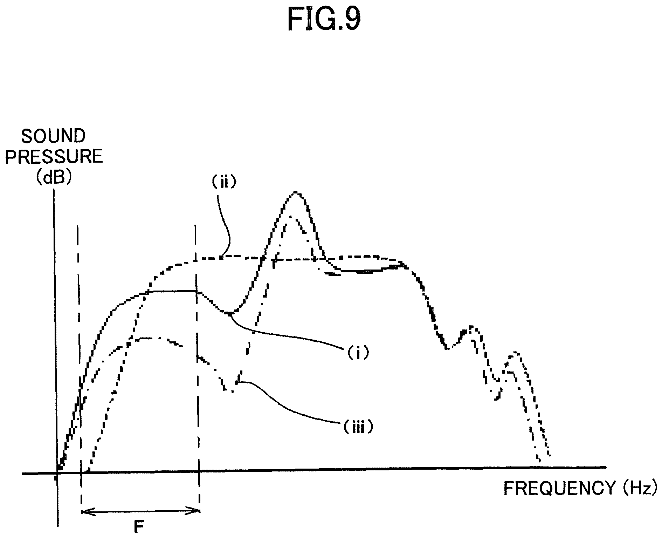

The graph of Fig. 9 depicts the simulation results of the frequency response (i) of the vehicle speaker 1 of the embodiment of the present disclosure, the frequency response (ii) of Comparative Example 1, and the frequency response (iii) of Comparative Example 2. The horizontal axis of the graph represents a reproduction frequency (Hz), and the vertical axis of the graph represents reproduction sound pressure (dB). In Comparative Example 1, the reproducing unit including the vibration portion 30, the magnetic circuit 40, and the damper members 36 and 37 illustrated in Fig. 3 are simply secured on the baffle and operated without being accommodated in the housing 10. In Comparative Example 2, a speaker having the housing 10 illustrated in Figs. 1 and 2, in which the cross-sectional area of the space of the duct portion D is made uniform without changing from the area of the sound pressure opening 13 across the entire length, is operated.

According to the simulation results depicted in Fig. 9, the frequency response (i) of the vehicle speaker 1 having the duct portion and the frequency response (iii) of Comparative Example 2 could expand the frequency band of the reproduction frequencies to a frequency band F usable as a subwoofer, such as a region of 100 Hz or lower, compared with the frequency response (ii) of Comparative Example 1 in which the reproducing unit was attached to the baffle. Moreover, the frequency response (i) of the vehicle speaker 1 of the embodiment had a high sensitivity in the bass range that was the usable frequency band F, compared with the frequency response (iii) of Comparative Example 2 having the duct portion with the uniform cross-sectional area.

### <Modification example>

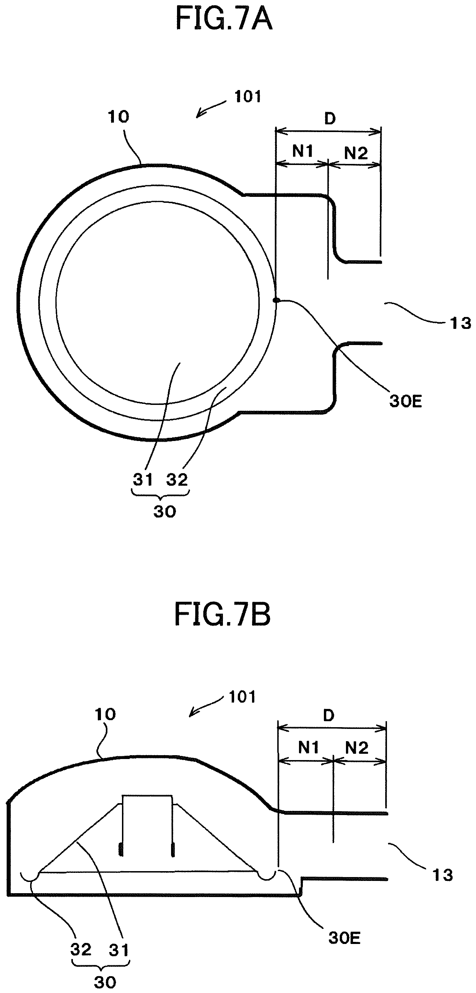

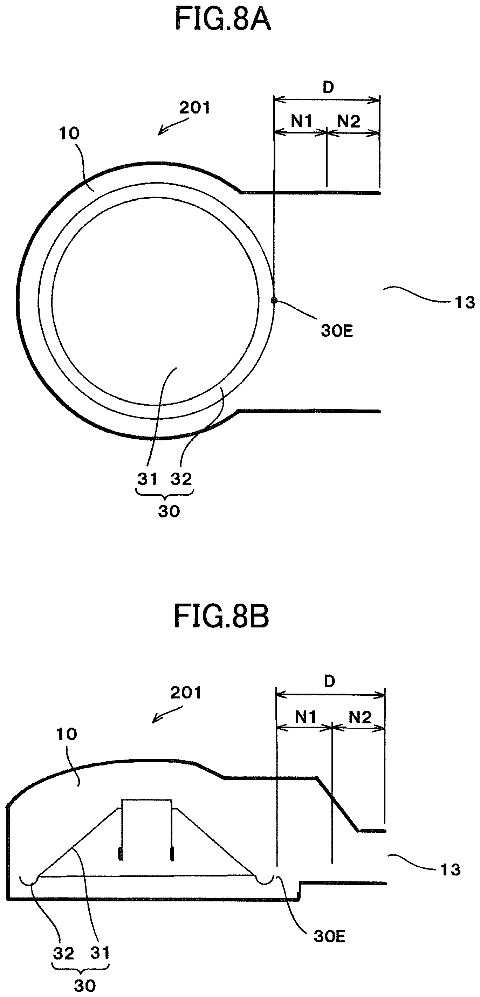

The vehicle speaker 101 of the first modification example of Figs. 7A and 7B has a planar shape of the duct portion D that has a constant width from the starting edge 30E to the intermediate point, from which the width gradually decreases toward the sound pressure opening 13, as illustrated in Fig. 7A. As illustrated in Fig. 7B, the height of the duct portion D is uniform in the side view shape. The duct portion D is configured such that the internal volume of the starting-edge-side section N1 is larger than the internal volume of the sound-pressure-opening-side section N2. The vehicle speaker 201 of the second modification example of Figs. 8A and 8B has a planar shape of the duct portion D that has a constant width across the entire length from the starting edge 30E to the sound pressure opening 13, as illustrated in Fig. 8A. As illustrated in Fig. 8B, the height of the duct portion D increases from the starting edge 30E to the intermediate point, from which the height gradually decreases to have a small height at the sound pressure opening 13 in the side view shape. In the second modification example, the duct portion D is also configured such that the internal volume of the starting-edge-side section N1 is larger than the internal volume of the sound-pressure-opening-side section N2.

In the duct portion D of the vehicle speaker 101 of the first modification example and the duct portion D of the vehicle speaker 201 of the second modification example, the internal volume of the starting-edge-side section N1 is larger than the internal volume of the sound-pressure-opening-side section N2. Moreover, the cross-sectional area of the space of the duct portion D at the cross-section passing through the starting edge 30E is larger than the cross-sectional area of the space passing through the center of the sound pressure opening 13. Therefore, an effect of expanding a usable band of reproduction frequencies to a bass range and an effect of increasing the sensitivity in the bass range can be easily set in a well-balanced manner.

The vehicle speaker of the present disclosure can easily achieve both an effect of expanding a usable band of reproduction frequencies to a bass range and an effect of increasing the sensitivity in the bass range by increasing a cross-sectional area and internal volume of a duct portion at a starting edge, i.e., the vicinity of an inner position of a housing, even if a cross-sectional area and internal volume of the duct adjacent to the sound pressure opening are small. Further, the vehicle speaker of the present disclosure can easily achieve both an effect of expanding a usable band of reproduction frequencies to a bass range and an effect of increasing the sensitivity in the bass range by making the shape of the housing large at a central portion of the vibration portion and gradually decreasing the dimensions of the housing toward the sound pressure opening as viewed in a plan view or as viewed in a vertical view.

Although the vehicle speaker of the present disclosure has been described with reference to the above embodiments, the present disclosure is not limited to the above embodiments, and various variations and modifications may be made without departing from the scope of the claims.

## Claims

1. A vehicle speaker comprising:
a vibration portion;
a magnetic driver configured to drive the vibration portion; and
a housing in which the vibration portion and the magnetic driver are accommodated, and a sound pressure opening is formed,
wherein a sound pressure space partitioned by the vibration portion and communicating with the sound pressure opening is formed in the housing,
wherein the sound pressure space includes a duct portion that extends from a starting edge to the sound pressure opening, where the starting edge is an edge of the vibration portion closest to the sound pressure opening, and
a cross-sectional area of a space of the duct portion at the starting edge is larger than an area of the sound pressure opening.

2. The vehicle speaker according to claim 1,
wherein when the duct portion is divided into multiple sections by evenly dividing a distance from the starting edge to the sound pressure opening, among the multiple sections, an internal volume of a starting-edge-side section including the starting edge is larger than an internal volume of a sound-pressure-opening-side section including the sound pressure opening.

3. The vehicle speaker according to claim 2,
wherein, when the duct portion is divided into two sections, which are the starting-edge-side section including the starting edge and the sound-pressure-opening-side section including the sound pressure opening, by bisecting the distance from the starting edge to the sound pressure opening,
an internal volume of the starting-edge-side section including the starting edge is larger than an internal volume of the sound-pressure-opening-side section including the sound pressure opening.

4. The vehicle speaker according to claim 2,
wherein, when the duct portion is divided into three sections, which include the starting-edge-side section including the starting edge, an intermediate section, and the sound-pressure-opening-side section including the sound pressure opening, by evenly dividing the distance from the starting edge to the sound pressure opening into three,
an internal volume of the starting-edge-side section including the starting edge is larger than an internal volume of the sound-pressure-opening-side section including the sound pressure opening, and is larger than an internal volume of the intermediate section.

5. The vehicle speaker according to one of claims 1 to 4,
wherein the cross-sectional area of the space of the duct portion gradually decreases from the starting edge toward the sound pressure opening.

6. A vehicle speaker comprising:
a vibration portion;
a magnetic driver configured to drive the vibration portion; and
a housing in which the vibration portion and the magnetic driver are accommodated, and a sound pressure opening is formed,
wherein a sound pressure space partitioned by the vibration portion and communicating with the sound pressure opening is formed in the housing, and
wherein, when a virtual line passing through a center of the vibration portion and extending in a vibration direction of the vibration portion is determined as a vibration center line, and a line intersecting the vibration center line at a right angle and extending to a center of the sound pressure opening is determined as a plane center line,
a width of the housing in a direction perpendicular to both the vibration center line and the plane center line gradually decreases from a position of the vibration center line toward the sound pressure opening.

7. The vehicle speaker according to claim 6,
wherein a height of the housing projected onto a vertical plane parallel to both the vibration center line and the plane center line gradually decreases from the position of the vibration center line toward the sound pressure opening.
